# EUROPEAN PATENT APPLICATION

(11) **EP 4 568 344 A1**
(43) Date of publication of application: **11.06.2025**
(21) Application number: 23849333.2
(22) Date of filing: 31.07.2023
(51) Int. Cl.: H04W 36/00

(54) **MOBILITY MANAGEMENT METHOD, NETWORK DEVICE AND TERMINAL**

(30) Priority: 03.08.2022 CN 202210927979
(71) Applicant: Datang Mobile Communications Equipment Co., Ltd., Beijing 100085 (CN)
(72) Inventor: ZHANG, Dajun, Beijing 100085 (CN)
(74) Representative: Studio Torta S.p.A.
(86) International application number: PCT/CN2023/110161
(87) International publication number: WO 2024/027625

(57) **Abstract**

Embodiments of the present disclosure provide a mobility management method, a network device, and a terminal. The method comprises: a first network element executing an update decision of a measurement configuration related to mobility between network elements and/or an access point (AP) related to mobility between the network elements; a second network element executing mapping or re-mapping between a session of a non-access layer and a bearer of an access layer. The network device comprises the first network element and the second network element.

## Description

### CROSS-REFERENCES TO RELATED APPLICATIONS

The present application claims priority to Chinese patent Application No. 202210927979.1 filed on August 03, 2022, entitled "Mobility Management Method, Network Device and Terminal", which is hereby incorporated by reference in its entirety.

### FIELD

The present application relates to the field of communications, and in particular, to methods for mobility management, network devices and terminals.

### BACKGROUND

With continuous evolution of network, a new network architecture design will usher in a new development cycle, and a future network architecture will fully provide an open and universal structure.

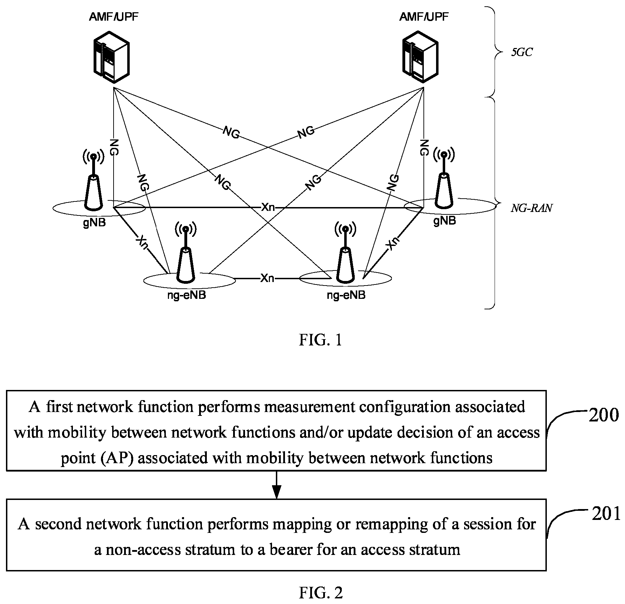

In a 5th generation mobile communication (5G) network architecture in the related art as shown in FIG. 1, a user equipment (UE) is connected to a next generation node base (gNB) through a wireless interface, and then the gNB performs control plane radio resource control (RRC) signaling connection establishment and user plane radio resource allocation procedures and etc. As the UE moves, the UE signaling connection will be handed over (i.e., deletion/reestablishment) between different gNBs (cells), and a service data transmission link between the UE and the network will also be changed. Based on a traditional network architecture model, control processing and other characteristics associated with mobility are completely in a single physical entity, which has the defects of centralization and undergeneralization, limiting the openness and generalization of the communication network. Accordingly, such an architecture fails to adapt to the future network evolution and development.

### BRIEF SUMMARY

Embodiments of the present application provides methods for mobility management, network devices and terminals to solve defects of centralization and undergeneralization since control processing and other characteristics associated with mobility are completely in a single physical entity in a traditional network architecture model.

An embodiment of the present application provides a method for mobility management, performed by a network device, including:
performing, by a first network function, measurement configuration associated with mobility between network functions and/or update decision of an access point (AP) associated with mobility between network functions; and
performing, by a second network function, mapping or remapping of a session for a non-access stratum to a bearer for an access stratum, where the network device includes the first network function and the second network function.

In an embodiment, according to the method for mobility management of the embodiment of the present application, the first network function is a mobility management function (MMF); and the second network function is a bearer management function (BMF).

In an embodiment, according to the method for mobility management of the embodiment of the present application, performing, by the first network function, the measurement configuration associated with mobility between network functions includes:
establishing, by the first network function, measurement configuration information for a terminal based on first information, where the first information includes at least one of the following: a wireless environment where the terminal is located, a potential frequency band of a neighboring access point, or reference pilot signal information; and
transmitting, by the first network function, the measurement configuration information to the terminal.

In an embodiment, according to the method for mobility management of the embodiment of the present application, the measurement configuration information includes at least one of the following: a measurement object, a measurement value, or a measurement reporting condition.

In an embodiment, according to the method for mobility management of the embodiment of the present application, performing, by the first network function, the update decision of AP associated with mobility between network functions includes:
establishing, by the first network function, a handover configuration massage based on second information, where the second information includes at least one of the following: a measurement result reported from a terminal, a radio resource management (RRM) policy, or an inference result from an artificial intelligence (AI) model; and
transmitting, by the first network function, the handover configuration massage to the terminal.

In an embodiment, according to the method for mobility management of the embodiment of the present application, the handover configuration massage includes at least one of the following: a list of candidate Aps, or a handover trigger threshold.

In an embodiment, according to the method for mobility management of the embodiment of the present application, performing, by the second network function, mapping or remapping of the session for the non-access stratum to the bearer for the access stratum includes:
generating a mapping relationship of a session or a flow or a sub-flow of a smaller granularity to an air interface radio bearer based on third information, where the mapping relationship includes one-to-one mapping, one-to-many mapping, many-to-one mapping, or many-to-many mapping;
the third information includes at least one of the following: a session for a non-access stratum, a quality of service of a session for a non-access stratum, or a session characteristic analysis result from an access stratum.

In an embodiment, according to the method for mobility management of the embodiment of the present application, the method further includes:
providing, by the second network function, a bearer update service to the first network function, and
calling, by the second network function, a resource configuration service to obtain wireless configuration information of a candidate AP.

An embodiment of the present application further provides a method for mobility management, performed by a terminal, including:
receiving, the terminal, measurement configuration information transmitted from a first network function through an access point (AP), performing measurement based on the measurement configuration information, and reporting a measurement result;
receiving a handover configuration message transmitted from the first network function through the AP; and
completing an operation of replacing the AP and notifying the first network function.

In an embodiment, according to the method for mobility management of the embodiment of the present application, before completing the operation of replacing the AP, the method further includes:
testing a handover trigger threshold based on a list of candidate APs in the handover configuration message, and initiating a handover execution step in case that a trigger condition is met.

In an embodiment, according to the method for mobility management of the embodiment of the present application, the handover configuration massage carries at least one of the following: a list of candidate APs, or a handover trigger threshold.

In an embodiment, according to the method for mobility management of the embodiment of the present application, the measurement configuration information includes at least one of the following: a measurement object, a measurement value, or a measurement reporting condition.

In an embodiment, according to the method for mobility management of the embodiment of the present application, the method further includes:
performing service data transmission through the replaced AP.

In an embodiment, according to the method for mobility management of the embodiment of the present application, the first network function is a mobility management function (MMF).

An embodiment of the present application further provides a method for mobility management, performed by an access point (AP), including:
receiving measurement configuration information transmitted from a first network function, and transmitting the measurement configuration information to a terminal; and
receiving a handover configuration message transmitted from the first network function, and transmitting the handover configuration message to the terminal, or testing a handover trigger threshold based on a list of candidate APs in the handover configuration message, and initiating a handover execution step in case that a trigger condition is met.

In an embodiment, according to the method for mobility management of the embodiment of the present application, the measurement configuration information includes at least one of the following: a measurement object, a measurement value, or a measurement reporting condition.

In an embodiment, according to the method for mobility management of the embodiment of the present application, the handover configuration massage carries at least one of the following: a list of candidate APs, or a handover trigger threshold.

In an embodiment, according to the method for mobility management of the embodiment of the present application, the first network function is a mobility management function (MMF).

An embodiment of the present application further provides a network device, including a memory, a transceiver and a processor, where
the memory is used for storing a computer program, the transceiver is used for receiving and transmitting data under control of the processor and the processor is used for reading the computer program in the memory and performing the following operations:
performing, by a first network function, measurement configuration associated with mobility between network functions and/or update decision of an access point (AP) associated with mobility between network functions; and
performing, by a second network function, mapping or remapping of a session for a non-access stratum to a bearer for an access stratum,
where the network device includes the first network function and the second network function.

In an embodiment, according to the network device of the embodiment of the present application, the first network function is a mobility management function (MMF); and the second network function is a bearer management function (BMF).

In an embodiment, according to the network device of the embodiment of the present application, performing the measurement configuration associated with mobility between network functions includes:
establishing measurement configuration information for a terminal based on first information, where the first information includes at least one of the following: a wireless environment where the terminal is located, a potential frequency band of a neighboring access point, or reference pilot signal information; and
transmitting the measurement configuration information to the terminal.

In an embodiment, according to the network device of the embodiment of the present application, the measurement configuration information includes at least one of the following: a measurement object, a measurement value, or a measurement reporting condition.

In an embodiment, according to the network device of the embodiment of the present application, performing the update decision of the AP associated with mobility between network functions includes:
establishing a handover configuration massage based on second information, where the second information includes at least one of the following: a measurement result reported from a terminal, a radio resource management (RRM) policy, or an inference result from an artificial intelligence (AI) model; and
transmitting the handover configuration massage to the terminal.

In an embodiment, according to the network device of the embodiment of the present application, the handover configuration massage includes at least one of the following: a list of candidate APs or a handover trigger threshold.

In an embodiment, according to the network device of the embodiment of the present application, performing the mapping or remapping of the session for the non-access stratum to the bearer for the access stratum includes:
generating a mapping relationship of a session or a flow or a sub-flow of a smaller granularity to an air interface radio bearer based on third information, where the mapping relationship includes one-to-one mapping, one-to-many mapping, many-to-one mapping, or many-to-many mapping;
the third information includes at least one of the following: a session for the non-access stratum, a quality of service of a session for the non-access stratum, or a session characteristic analysis result from the access stratum.

In an embodiment, according to the network device of the embodiment of the present application, the processor is further used for:
providing, by the second network function, a bearer update service to the first network function; and
calling, by the second network function, a resource configuration service to obtain wireless configuration information of a candidate AP.

An embodiment of the present application further provides a terminal, including a memory, a transceiver and a processor, where
the memory is used for storing a computer program, the transceiver is used for receiving and transmitting data under control of the processor, and the processor is used for reading the computer program in the memory and performing the following operations:
receiving measurement configuration information transmitted from a first network function through an access point (AP), performing measurement based on the measurement configuration information, and reporting a measurement result;
receiving a handover configuration message transmitted from the first network function through the AP; and
completing an operation of replacing the AP and notifying the first network function.

In an embodiment, according to the terminal of the embodiment of the present application, the processor is further used for:
testing a handover trigger threshold based on a list of candidate APs in the handover configuration message, and initiating a handover execution step in case that a trigger condition is met.

In an embodiment, according to the terminal of the embodiment of the present application, the handover configuration massage includes at least one of the following: a list of candidate APs, or a handover trigger threshold.

In an embodiment, according to the terminal of the embodiment of the present application, the measurement configuration information includes at least one of the following: a measurement object, a measurement value, or a measurement reporting condition.

In an embodiment, according to the terminal of the embodiment of the present application, the processor is further used for:
performing service data transmission through the replaced AP.

In an embodiment, according to the terminal of the embodiment of the present application, the first network function is a mobility management function (MMF).

An embodiment of the present application further provides a network device, including a memory, a transceiver and a processor, where
the memory is used for storing a computer program, the transceiver is used for receiving and transmitting data under control of the processor and the processor is used for reading the computer program in the memory and performing the following operations:
receiving the measurement configuration information transmitted from a first network function, and transmitting the measurement configuration information to a terminal; and
receiving a handover configuration message transmitted from the first network function, and transmitting the handover configuration message to the terminal, or testing a handover trigger threshold based on a list of candidate APs in the handover configuration message, and initiating a handover execution step in case that a trigger condition is met.

In an embodiment, according to the network device of the embodiment of the present application, the measurement configuration information includes at least one of the following: a measurement object, a measurement value, or a measurement reporting condition.

In an embodiment, according to the network device of the embodiment of the present application, the handover configuration massage carries at least one of the following: a list of candidate APs, or a handover trigger threshold.

In an embodiment, according to the network device of the embodiment of the present application, the first network function is a mobility management function (MMF).

An embodiment of the present application further provides a network device, including:
a mobility management function (MMF), used for performing measurement configuration associated with mobility between network functions and/or update decision of an access point (AP) associated with mobility between network functions; and
a bearer management function (BMF), used for performing mapping or remapping of a session for a non-access stratum to a bearer for an access stratum,

An embodiment of the present application provides a terminal, including:
a measuring unit, used for receiving measurement configuration information transmitted from a first network function through an access point (AP), performing measurement based on the measurement configuration information, and reporting a measurement result;
a receiving unit, used for receiving a handover configuration message transmitted from the first network function through the AP; and
a handover unit, used for completing an operation of replacing the AP and notifying the first network function.

An embodiment of the present application further provides a network device, including:
a transmitting unit, used for receiving the measurement configuration information transmitted from a first network function, and transmitting the measurement configuration information to a terminal; and
a processing unit, used for receiving a handover configuration message transmitted from the first network function, and transmitting the handover configuration message to the terminal, or testing a handover trigger threshold based on a list of candidate APs in the handover configuration message, and initiating a handover execution step in case that a trigger condition is met.

An embodiment of the present application further provides a processor-readable storage medium, where the processor-readable storage medium stores a computer program, and the computer program causes a processor to perform steps of the methods for mobility management described above.

In the methods for mobility management, network devices and terminals provided by embodiments of the present application, the first network function of the wireless access network (control plane cloud) completes the measurement configuration and/or update decision of the access point, and the second network function of the wireless access network (control plane cloud) completes the bearer mapping or remapping, the network function is more virtualized or cloud-based, and the openness and generalization of the communication network are provided under the premise of ensuring the mobility performance.

### BRIEF DESCRIPTION OF THE DRAWINGS

To illustrate solutions in the embodiments of the present application or the related art more clearly, the drawings used in the descriptions of the embodiments or the prior art will be briefly described below. The drawings in the following description are some embodiments of the present application, and other drawings may be obtained based on these drawings without any creative work for those skilled in the related art.
FIG. 1 is a schematic structural diagram of a 5G network architecture in the related art;
FIG. 2 is a first schematic flowchart of a method for mobility management according to an embodiment of the present application;
FIG. 3 is a second schematic flowchart of a method for mobility management according to an embodiment of the present application;
FIG. 4 is a third schematic flowchart of a method for mobility management according to an embodiment of the present application;
FIG. 5 is a first schematic interaction flowchart of a method for mobility management according to an embodiment of the present application;
FIG. 6 is a second schematic interaction flowchart of a method for mobility management according to an embodiment of the present application;
FIG. 7 is a third schematic interaction flowchart of a method for mobility management according to an embodiment of the present application;
FIG. 8 is a first schematic structural diagram of a network device according to an embodiment of the present application.
FIG. 9 is a first schematic structural diagram of a terminal according to an embodiment of the present application;
FIG. 10 is a second schematic structural diagram of a network device according to an embodiment of the present application.
FIG. 11 is a third schematic structural diagram of a network device according to an embodiment of the present application.
FIG. 12 is a second schematic structural diagram of a terminal according to an embodiment of the present application; and
FIG. 13 is a fourth schematic structural diagram of a network device according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

Embodiments of the present application provides methods for mobility management, network devices and terminals to solve defects that centralization and undergeneralization of a communication network are limited, since control processing and other characteristics associated with mobility are completely in a single physical entity in a traditional network architecture model.

The methods and the apparatuses are based on the same disclosed concept, the implementation of the devices and the methods can be referred to each other d since the principles of the methods and the apparatuses are similar, and the repetition will not be repeated.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as a user equipment (UE). A wireless terminal may communicate with one or more core networks (CN) via a radio access network (RAN), and the wireless terminal may be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device involved in the embodiments of the present application may be a base station, and the base station may include a plurality of cells providing services for the terminal. Depending on the specific application, the network side device may also be called an access point, or may be a device in the access network that communicates with wireless terminal through one or more sectors on the air interface, or other names. Network side device may be used to exchange received air frames with Internet Protocol (IP) packets, and act as a router between wireless terminal and the rest of the access network, and the rest of the access network may include an Internet protocol (IP) communication network. The network side devices may also coordinate attribute management for the air interface. For example, the network side device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network side device may include a centralized unit (CU) node and a distributed unit (DU) node, and the centralized unit and the distributed unit may also be geographically separated.

FIG. 2 is a first schematic flowchart of a method for mobility management according to an embodiment of the present application. As shown in FIG. 2, the method for mobility management according to an embodiment of the present application may be performed by a network device. The method includes the following:
step 200: a first network function performs measurement configuration associated with mobility between network functions and/or update decision of an access point (AP) associated with mobility between network functions; and
step 201: a second network function performs mapping or remapping of a session for a non-access stratum to a bearer for an access stratum.

The present application provides a new mobility signaling. The first network function of the wireless access network (control plane cloud) completes the measurement configuration and/or update decision of the access point, and the second network function of the wireless access network (control plane cloud) completes the bearer mapping or remapping.

In an embodiment, the first network function is a mobility management function (MMF); and the second network function is a bearer management function (BMF).

In an embodiment of the present application, MMF and BMF are two different functional entities.

In the embodiment of the present application, the first network function may also be other functional entities capable of implementing measurement configuration and/or update decision of the AP, which is not limited in the embodiment of the present application. The following description is made by taking the first network function as MMF for example. The second network function may also be other functional entities capable of implementing bearer mapping or remapping, which is not limited in the embodiment of the present application. The following description is made by taking the second network function as BMF for example.

In an embodiment, the MMF of the wireless access network (control plane cloud) is mainly responsible for the following two functions.
(1) Performing the measurement configuration associated with mobility between network functions

In an embodiment, performing, by the first network function, the measurement configuration associated with mobility between network functions includes:
establishing, by the MMF, measurement configuration information for a terminal based on first information, where the first information includes at least one of the following: a wireless environment where the terminal is located, a potential frequency band of a neighboring access point, or reference pilot signal information; and
transmitting, by the MMF, the measurement configuration information to the terminal.

In an embodiment, the measurement configuration information includes at least one of the following: a measurement object, a measurement value, or a measurement reporting condition.

The MMF configures the measurement object, the measurement value, and the measurement reporting condition of the terminal based on the wireless environment where the terminal is located, the potential frequency band of a neighboring access point, or the reference pilot signal information.

In an embodiment, the MMF calls the signaling bearer transmission service to transmit the measurement configuration information to the terminal through the access point.

(2) performing the update decision of the AP associated with mobility between network functions

In an embodiment, performing, by the first network function, the update decision of the AP associated with mobility between network functions includes:
establishing, by the MMF, a handover configuration massage based on second information, where the second information includes at least one of the following: a measurement result reported from a terminal, a radio resource management (RRM) policy, or an inference result from an artificial intelligence (AI) model; and
transmitting, by the MMF, the handover configuration message to the terminal.

The MMF decides a target access point or a list of target access points based on the measurement result from the terminal, a certain RRM strategy, or the inference result from the AI model, that is, obtains the handover decision, and the MMF establishes the handover configuration message of the UE, calls the signaling bearer transmission service, and transmits the handover configuration message to the terminal through the access point.

The handover configuration message includes a target access point (list) and/or the wireless configuration information of a target access point (list).

In an embodiment, the handover configuration massage includes at least one of the following: a list of candidate APs, or a handover trigger threshold.

The MMF decides a candidate access point or a list of candidate access points based on the measurement results from the terminal, a certain RRM strategy, or the inference result from the AI model.

In some embodiments, the handover configuration message includes a list of candidate access points and a handover trigger threshold. The MMF transmits the handover configuration message to the terminal through the access point, and the terminal tests the corresponding trigger threshold based on the list of candidate APs and initiates the handover execution step in case that the trigger condition is met.

In an embodiment, the BMF of the wireless access network (control plane cloud) is mainly responsible for the following function:
performing mapping or remapping of the session for the non-access stratum to the bearer for the access stratum.

In an embodiment, performing, by the second network function, mapping or remapping of the session for the non-access stratum to the bearer for the access stratum includes:
generating, by the BMF, a mapping relationship of a session or a flow or a sub-flow of a smaller granularity to an air interface radio bearer based on third information, where the mapping relationship includes one-to-one mapping, one-to-many mapping, many-to-one mapping, or many-to-many mapping;
the third information includes at least one of the following: a session for the non-access stratum, a quality of service of a session for the non-access stratum, or a session characteristic analysis result from the access stratum.

The BMF generates one-to-one mapping, one-to-many mapping, many-to-one mapping, or many-to-many mapping of the session or the flow or the sub-flow of a smaller granularity to the air interface radio bearer based on the session for the non-access stratum, the quality of service of the session for the non-access stratum, or the session characteristic analysis result from the access stratum, and completes the mapping or remapping between the session for the non-access stratum and the bearer for the access stratum.

In the method for mobility management provided by embodiments of the present application, the MMF of the wireless access network (control plane cloud) completes the measurement configuration and/or update decision of the access point, and the BMF of the wireless access network (control plane cloud) completes the bearer mapping or remapping, the network function is more virtualized or cloud-based, and the openness and generalization of the communication network are provided under the premise of ensuring the mobility performance.

In an embodiment, the method further include:
providing, by the BMF, a bearer update service to the MMF; and
calling, by the BMF, a resource configuration service to obtain wireless configuration information of a candidate AP.

In the embodiment of the present application, the MMF applies to the BMF for a bearer update service, the BMF provides the bearer update service to the MMF, the BMF calls the resource configuration service to obtain the wireless configuration information of the candidate AP, and the wireless configuration information of the candidate AP may be used by the terminal to complete the AP replacement operation.

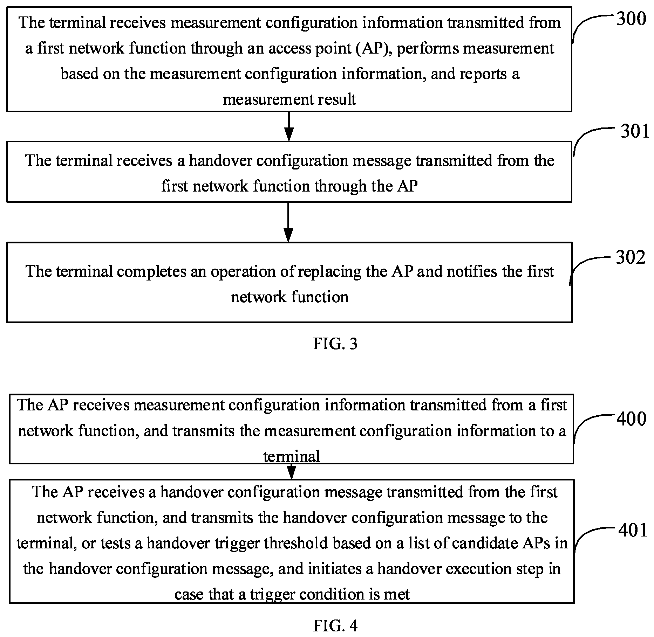

FIG. 3 is a second schematic flowchart of a method for mobility management according to an embodiment of the present application. As shown in FIG. 3, the method is performed by a terminal. The method includes the following.

Step 300: the terminal receives measurement configuration information transmitted from a first network function through an access point (AP), performs measurement based on the measurement configuration information, and reports a measurement result.

In an embodiment, the first network function is the MMF. In the embodiment of the present application, the first network function may also be other functional entities capable of implementing measurement configuration and/or update decision of the AP, which is not limited in the embodiment of the present application. The following description is made by taking the first network function as MMF for example.

In the embodiment of the present application, the MMF establishes measurement configuration information for a terminal based on first information, where the first information includes at least one of the following: a wireless environment where the terminal is located, a potential frequency band of a neighboring access point, or reference pilot signal information. The MMF transmits the measurement configuration information to the terminal through an access point. The terminal receives the measurement configuration information transmitted from the MMF through the AP, performs measurement based on the measurement configuration information, and reports the measurement result through the AP.

In an embodiment, the measurement configuration information includes at least one of the following: a measurement object, a measurement value, or a measurement reporting condition. For example, the terminal performs measurement on a measurement object indicated by the measurement configuration information and reports the measurement result in case that a reporting condition is met.

Step 301: the terminal receives a handover configuration message transmitted from the first network function through the AP.

In an embodiment of the present application, the MMF establishes a handover configuration massage based on second information, where the second information includes at least one of the following: a measurement result reported from a terminal, a radio resource management (RRM) policy, or inference result from an artificial intelligence (AI) model; and the MMF transmits the handover configuration massage to the terminal. The terminal receives the handover configuration massage through an access point.

In an embodiment, the handover configuration message includes a target access point (list) and/or the wireless configuration information of the target access point (list).

In an embodiment, the handover configuration massage includes at least one of the following: a list of candidate APs, or a handover trigger threshold.

Step 302: the terminal completes an operation of replacing the AP and notifies the first network function.

After receiving the handover configuration message, the terminal completes the operation of replacing the AP, notifies the MMF, and then performs path switch.

In the method for mobility management provided by the embodiment of the present application, the first network function of the wireless access network (a control plane cloud) completes the measurement configuration and/or update decision of the access point, and the second network function of the wireless access network (control plane cloud) completes the bearer mapping or remapping. The terminal receives the measurement configuration information transmitted from the first network function, performs measurement based on the measurement configuration information, and reports the measurement result. The terminal receives the handover configuration message transmitted from the MMF through the AP, completes the operation of replacing the AP, and the terminal may perform service data transmission through the replaced AP. The network function is more virtualized or cloud-based, and the openness and generalization of the communication network are provided under the premise of ensuring the mobility performance.

In an embodiment, before the terminal completes the operation of replacing the AP, the method also includes:
testing a handover trigger threshold based on a list of candidate APs in the handover configuration message, and initiating a handover execution step in case that a trigger condition is met.

The MMF transmits the handover configuration message to the terminal through the access point, and the terminal tests the corresponding trigger threshold based on the list of candidate APs in the handover configuration message and initiates the handover execution step in case that the trigger condition is met. Further, the terminal completes the operation of replacing the AP, notifies the MMF, and then performs the path switch.

In an embodiment, the method further include:
performing service data transmission through the replaced AP.

After the terminal completes the operation of replacing the AP, the service data completes the channel switch from the replaced AP to a user plane function (UPF), and starts the continuous transmission of the service data.

FIG. 4 is a third schematic flowchart of a method for mobility management according to an embodiment of the present application. As shown in FIG. 4, the method is performed by an access point (AP). The method includes the following.

Step 400: the AP receives measurement configuration information transmitted from a first network function, and transmits the measurement configuration information to a terminal.

In an embodiment, the first network function is the MMF. In the embodiment of the present application, the first network function may also be other functional entities capable of implementing measurement configuration and/or update decision of the AP, which is not limited in the embodiment of the present application. The following description is made by taking the first network function as MMF for example.

The access point transmits the measurement configuration information between the MMF and the terminal. After receiving the measurement configuration information, the terminal performs measurement and reports the measurement result, and the AP continues to transmit the measurement result between the MMF and the terminal.

Step 401: the AP receives a handover configuration message transmitted from the first network function, and transmits the handover configuration message to the terminal, or tests a handover trigger threshold based on a list of candidate APs in the handover configuration message, and initiates a handover execution step in case that a trigger condition is met.

In an implementation, the AP transmits the handover configuration message between the MMF and the terminal. After receiving the handover configuration message, the terminal completes the operation of replacing the AP, notifies the MMF, and then performs the path conversion; or the terminal tests the corresponding trigger threshold based on the list of candidate APs, and initiates the handover execution step in case that the trigger condition is met.

In some embodiment, after receiving the handover configuration message transmitted from the MMF, the access point may also test the corresponding handover trigger threshold based on the list of candidate APs in the handover configuration message, and initiates the handover execution step in case that the trigger condition is met. On this basis, in an embodiment, the target access point (i.e., a candidate access point that meets the handover trigger threshold) completes the operation of replacing the AP and notifies the MMF.

In an embodiment, the measurement configuration information includes at least one of the following: a measurement object, a measurement value, or a measurement reporting condition.

In an embodiment, the handover configuration massage carries at least one of the following: a list of candidate APs, or a handover trigger threshold.

In the method for mobility management provided by the embodiment of the present application, in addition to transmitting measurement configuration information and handover configuration messages between the terminal and the first network function, the access point may also test the corresponding handover trigger threshold based on the list of candidate APs in the handover configuration message, and initiates the handover execution step in case that the trigger condition is met, and the openness and generalization of the communication network are provided under the premise of ensuring the mobility performance.

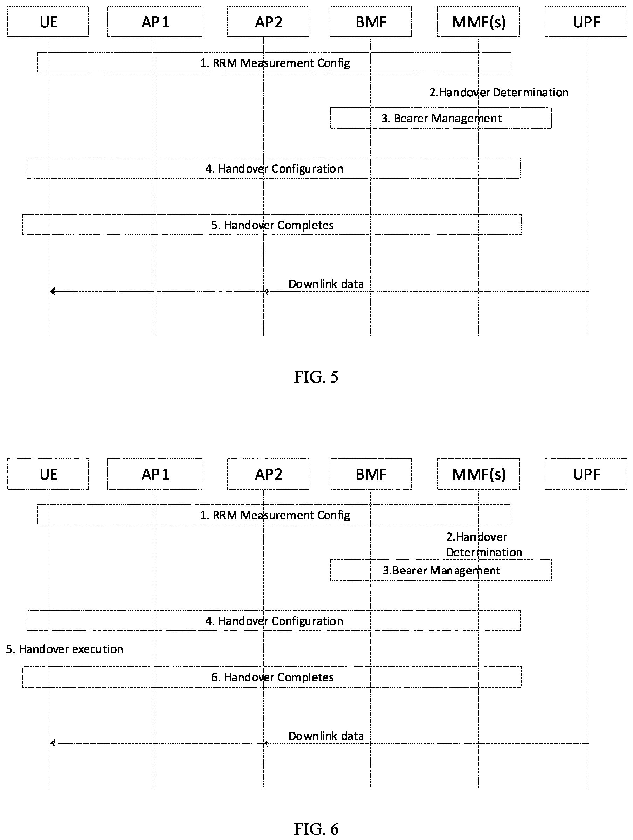

FIG. 5 is a first schematic interaction flowchart of a method for mobility management according to an embodiment of the present application. As shown in FIG. 5, the method for mobility management includes the following steps.

Step 1: the MMF obtains a wireless environment configuration of the current UE, then establishes measurement configuration information for the UE, calls a signaling bearer transmission service, and transmits the message to the UE through a first AP1.

Step 2: the MMF obtains a handover decision based on a measurement result of the UE and another handover policies.

Step 3: the MME applies for a bearer update service of the BMF, and then the BMF calls the resource configuration service to obtain the wireless configuration information associated with a target AP2.

Step 4: the MMF establishes the handover configuration message of the UE, calls the signaling bearer transmission service, and transmits the message to the UE through the first AP1.

Step 5: the UE completes the operation of replacing the AP and notifies the MMF.

Step 6: the service data completes the channel handover from a target AP2 to the UPF, and starts the continuous transmission of the service data at the same time.

FIG. 6 is a second schematic interaction flowchart of a method for mobility management according to an embodiment of the present application. As shown in FIG. 6, the method for mobility management includes the following steps.

Step 1: the MMF obtains a wireless environment configuration of the current UE, then establishes measurement configuration information for the UE, calls a signaling bearer transmission service, and transmits the message to the UE through a first AP1.

Step 2: the MMF obtains a handover decision based on a measurement result of the UE and another handover policies.

Step 3: the MME applies for a bearer update service of the BMF, and then the BMF calls the resource configuration service to obtain the wireless configuration information associated with a target AP2.

Step 4: the MMF establishes a handover configuration message (containing information such as the handover trigger threshold and the list of candidate APs) for UE, calls a signaling bearer transmission service, and transmits the message to the UE through AP1.

Step 5: the UE tests the corresponding trigger threshold based on the list of candidate APs, and will initiates the handover execution step in case that the trigger condition is met (in case that the trigger condition is met, the corresponding candidate AP is the target AP).

Step 6: the UE completes the operation of replacing the AP and notifies the MMF.

Step 7: the service data completes the channel handover from a target AP2 to the UPF, and starts the continuous transmission of the service data.

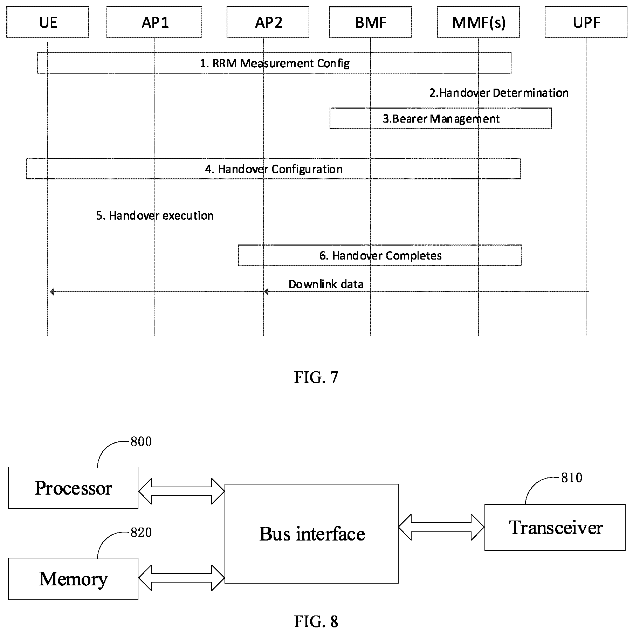

FIG. 7 is a third schematic interaction flowchart of a method for mobility management according to an embodiment of the present application. As shown in FIG. 7, the method for mobility management includes the following steps.

Step 1: the MMF obtains a wireless environment configuration of the current UE, then establishes measurement configuration information for the UE, calls a signaling bearer transmission service, and transmits the message to the UE through a first AP1.

Step 2: the MMF obtains a handover decision based on a measurement result of the UE and another handover policies.

Step 3: the MME applies for a bearer update service of the BMF, and then the BMF calls the resource configuration service to obtain the wireless configuration information associated with a target AP2.

Step 4: the MMF establishes the handover configuration message for the UE (containing the list of candidate APs and the corresponding physical channel configuration and other information), calls the signaling bearer transmission service, and transmits the message to the UE through the first AP1.

Step 5: the first AP1 triggers the handover execution step.

Step 6: a target AP2 completes the operation of replacing the AP and notifies the MMF.

Step 7: the service data completes the channel handover from a target AP2 to the UPF, and starts the continuous transmission of the service data at the same time.

FIG. 8 is a first schematic structural diagram of a network device according to an embodiment of the present application. As shown in FIG. 8, the network device includes a memory 820, a transceiver 810, and a processor 800, where
the memory 820 is used for storing a computer program, the transceiver is used for receiving and transmitting data under control of the processor, and the processor is used for reading the computer program in the memory and performing the following operations:
performing, by a first network function, measurement configuration associated with mobility between network functions and/or update decision of an access point (AP) associated with mobility between network functions; and
performing, by a second network function, mapping or remapping of a session for a non-access stratum to a bearer for an access stratum,
where the network device includes the first network function and the second network function.

In an embodiment, the first network function is a mobility management function (MMF); and the second network function is a bearer management function (BMF).

In an embodiment, performing the measurement configuration associated with mobility between network functions includes:
establishing measurement configuration information for a terminal based on first information, where the first information includes at least one of the following: a wireless environment where the terminal is located, a potential frequency band of a neighboring access point, or reference pilot signal information; and
transmitting the measurement configuration information to the terminal.

In an embodiment, the measurement configuration information includes at least one of the following: a measurement object, a measurement value, or a measurement reporting condition.

In an embodiment, performing the update decision of the AP associated with mobility between network functions includes:
establishing a handover configuration massage based on second information, where the second information includes at least one of the following: a measurement result reported from a terminal, a radio resource management (RRM) policy, or an inference result from an artificial intelligence (AI) model; and
transmitting the handover configuration massage to the terminal.

In an embodiment, the handover configuration massage includes at least one of the following: a list of candidate APs or a handover trigger threshold.

In an embodiment, performing mapping or remapping of the session for the non-access stratum to the bearer for the access stratum includes:
generating a mapping relationship of a session or a flow or a sub-flow of a smaller granularity to an air interface radio bearer based on third information, where the mapping relationship includes one-to-one mapping, one-to-many mapping, many-to-one mapping, or many-to-many mapping;
the third information includes at least one of the following: a session for the non-access stratum, a quality of service of a session for the non-access stratum, or a session characteristic analysis result from the access stratum.

In an embodiment, the processor 800 is further used for:
providing, by the second network function, a bearer update service to the first network function; and
calling, by the second network function, a resource configuration service to obtain wireless configuration information of a candidate AP.

The transceiver 810 is used for receiving and transmitting data under control of the processor 800.

In FIG. 8, a bus architecture may include any number of interconnected buses and bridges, which are linked together through various circuits of one or more processors represented by processor 800 and one or more memories represented by the memory 820. The bus architecture may also link together various other circuits, such as peripherals, voltage regulators, and power management circuits, which are well known in the art, and therefore will not be further described in the present application. The bus interface provides an interface. The transceiver 810 may be multiple elements, i.e., including a transmitter and a receiver, units for providing communication with various other devices over transmission media including wireless channels, wired channels, fiber optic cables, and the like. The processor 800 is responsible for managing the bus architecture and general processing, and the memory 820 may store data used by the processor 800 when performing operations.

The processor 800 may be a central processing unit (CPU), an application specific integrated circuit (ASIC), a field-programmable gate array (FPGA), or a complex programmable logic device (CPLD), the processor may also use a multi-core architecture.

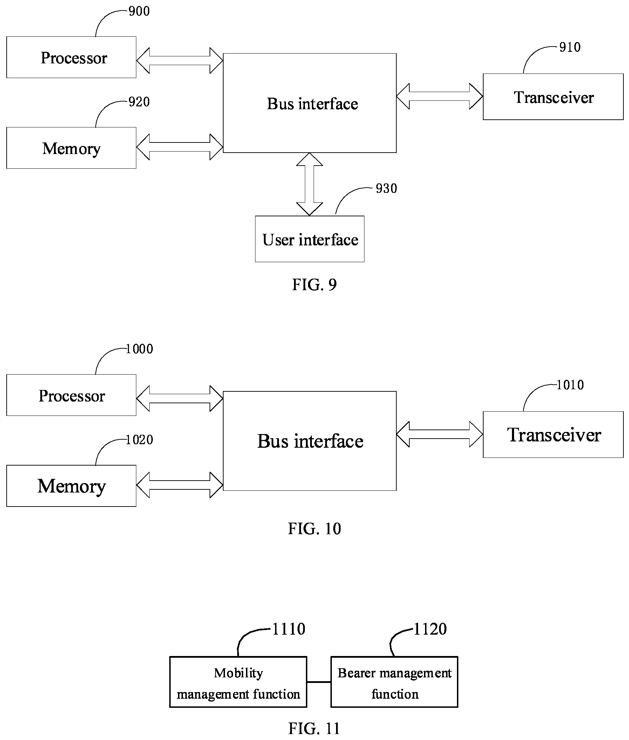

FIG. 9 is a first schematic structural diagram of a terminal according to an embodiment of the present application. As shown in FIG. 9, the terminal includes a memory 920, a transceiver 910 and a processor 900, where
the memory 920 is used for storing a computer program; the transceiver 910 is used for receiving and transmitting data under control of the processor; and the processor 900 is used for reading the computer program in the memory and performing the following operations:
receiving measurement configuration information transmitted from a first network function through an access point (AP), performing measurement based on the measurement configuration information, and reporting a measurement result;
receiving a handover configuration message transmitted from the first network function through the AP; and
completing an operation of replacing the AP and notifying the first network function.

In an embodiment, the processor 900 is further used for:
testing a handover trigger threshold based on a list of candidate APs in the handover configuration message, and initiating a handover execution step in case that a trigger condition is met.

In an embodiment, the handover configuration massage includes at least one of the following: a list of candidate APs, or a handover trigger threshold.

In an embodiment, the measurement configuration information includes at least one of the following: a measurement object, a measurement value, or a measurement reporting condition.

In an embodiment, the processor is further used for:
performing service data transmission through the replaced AP.

In an embodiment, the first network function is a mobility management function (MMF).

The transceiver 910 is used for receiving and transmitting data under control of the processor 900.

In FIG. 9, a bus architecture may include any number of interconnected buses and bridges, which are linked together through various circuits of one or more processors represented by processor 900 and one or more memories represented by the memory 920. The bus architecture may also link together various other circuits, such as peripherals, voltage regulators, and power management circuits, which are well known in the art, and therefore will not be further described in the present application. The bus interface provides an interface. The transceiver 910 may be multiple elements, i.e., including a transmitter and a receiver, units for providing communication with various other devices over transmission media including wireless channels, wired channels, fiber optic cables, and the like. For different user equipment, the user interface 930 may also be an interface capable of externally or internally connecting the required equipment, and the connected equipment includes, but not limited to, a keypad, a display, a speaker, a microphone, a joystick, and the like.

The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic device (CPLD), the processor may also use a multi-core architecture.

The processor is configured to perform any of the methods of the embodiments of the present application based on the obtained executable instructions by calling the computer program stored in the memory. The processor and memory may also be physically separated.

It should be noted here that the above-mentioned apparatus according to the embodiments of the present application can implement all the method steps implemented by the above-mentioned method embodiments, and can achieve the same effect. The same parts and beneficial effects as the same method embodiments will not be repeated here.

FIG. 10 is a second schematic structural diagram of a network device according to an embodiment of the present application. As shown in FIG. 10, the network device includes a memory 1020, a transceiver 1010, and a processor 1000, where
the memory 1020 is used for storing a computer program; the transceiver 1010 is used for receiving and transmitting data under control of the processor; and the processor 1000 is used for reading the computer program in the memory and performing the following operations:
receiving the measurement configuration information transmitted from a first network function, and transmitting the measurement configuration information to a terminal; and
receiving a handover configuration message transmitted from the first network function, and transmitting the handover configuration message to the terminal, or testing a handover trigger threshold based on a list of candidate APs in the handover configuration message, and initiating a handover execution step in case that a trigger condition is met.

In an embodiment, the measurement configuration information includes at least one of the following: a measurement object, a measurement value, or a measurement reporting condition.

In an embodiment, the handover configuration massage carries at least one of the following: a list of candidate APs, or a handover trigger threshold.

In an embodiment, the first network function is a mobility management function (MMF).

FIG. 11 is a third schematic structural diagram of a network device according to an embodiment of the present application. As shown in FIG. 11, the network device includes:
a mobility management function 1110, used for performing measurement configuration associated with mobility between network functions and/or update decision of an access point (AP) associated with mobility between network functions; and
a bearer management function 1120, used for performing mapping or remapping of a session for a non-access stratum to a bearer for an access stratum.

In an embodiment, performing the measurement configuration associated with mobility between network functions includes:
establishing measurement configuration information for a terminal based on first information, where the first information includes at least one of the following: a wireless environment where the terminal is located, a potential frequency band of a neighboring access point, or reference pilot signal information; and
transmitting the measurement configuration information to the terminal.

In an embodiment, the measurement configuration information includes at least one of the following: a measurement object, a measurement value, or a measurement reporting condition.

In an embodiment, performing the update decision of the AP associated with mobility between network functions includes:
establishing a handover configuration massage based on second information, where the second information includes at least one of the following: a measurement result reported from a terminal, a radio resource management (RRM) policy, or an inference result from an artificial intelligence (AI) model; and
transmitting the handover configuration massage to the terminal.

In an embodiment, the handover configuration massage includes at least one of the following: a list of candidate APs, or a handover trigger threshold.

In an embodiment, performing mapping or remapping of the session for the non-access stratum to the bearer for the access stratum includes:
generating a mapping relationship of a session or a flow or a sub-flow of a smaller granularity to an air interface radio bearer based on third information, where the mapping relationship includes one-to-one mapping, one-to-many mapping, many-to-one mapping, or many-to-many mapping;
the third information includes at least one of the following: a session for the non-access stratum, a quality of service of a session for the non-access stratum, or a session characteristic analysis result from the access stratum.

In an embodiment, the bearer management function 1120 is further used for providing a bearer update service to the mobility management function; and
the bearer management function 1120 is further used for calling a resource configuration service to obtain wireless configuration information of a candidate AP.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network side device, etc.) or a processor to perform all or part of the steps of the methods described in the respective embodiments of the present application. The storage medium described above includes various media that may store program codes such as flash disk, mobile hard disk, read-only memory (ROM), random access memory (RAM), magnetic disk, or a compact disk.

It should be noted here that the above-mentioned network device according to the embodiments of the present application can implement all the method steps implemented by the above-mentioned method embodiments, and can achieve the same effect. The same parts and beneficial effects as the same method embodiments will not be repeated here.

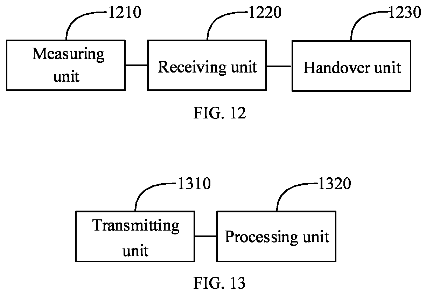

FIG. 12 is a second schematic structural diagram of a terminal according to an embodiment of the present application. As shown in FIG. 12, the terminal includes:
a measuring unit 1210, used for receiving measurement configuration information transmitted from a first network function through an access point (AP), performing measurement based on the measurement configuration information, and reporting a measurement result;
a receiving unit 1220, used for receiving a handover configuration message transmitted from the first network function through the AP; and
a handover unit 1230, used for completing an operation of replacing the AP and notifying the first network function.

In an embodiment, the terminal further include:
a testing unit, used for testing a handover trigger threshold based on a list of candidate APs in the handover configuration message, and initiating a handover execution step in case that a trigger condition is met.

In an embodiment, the handover configuration massage carries at least one of the following: a list of candidate APs, or a handover trigger threshold.

In an embodiment, the measurement configuration information includes at least one of the following: a measurement object, a measurement value, or a measurement reporting condition.

In an embodiment, the terminal further include:
a service transmitting unit, used for performing service data transmission through the replaced AP.

In an embodiment, the first network function is a mobility management function (MMF).

It should be noted here that the above-mentioned terminal according to the embodiments of the present application can implement all the method steps implemented by the above-mentioned method embodiments, and can achieve the same effect. The same parts and beneficial effects as the same method embodiments will not be repeated here.

FIG. 13 is a fourth schematic structural diagram of a network device according to an embodiment of the present application. As shown in FIG. 13, the network device includes:
a transmitting unit 1310, used for receiving the measurement configuration information transmitted from a first network function, and transmitting the measurement configuration information to a terminal; and
a processing unit 1320, used for receiving a handover configuration message transmitted from the first network function, and transmitting the handover configuration message to the terminal, or testing a handover trigger threshold based on a list of candidate APs in the handover configuration message, and initiating a handover execution step in case that a trigger condition is met.

In an embodiment, the measurement configuration information includes at least one of the following: a measurement object, a measurement value, or a measurement reporting condition.

In an embodiment, the handover configuration massage carries at least one of the following: a list of candidate APs, or a handover trigger threshold.

In an embodiment, the first network function is a mobility management function (MMF).

An embodiment of the present application further provides a processor-readable storage medium, where the processor-readable storage medium stores a computer program and the computer program causes a processor to perform the steps of the methods described above, and achieve the same technical effect, which will not be repeated here.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for mobility management, performed by a network device, comprising:
performing, by a first network function, measurement configuration associated with mobility between network functions and/or update decision of an access point (AP) associated with mobility between network functions; and
performing, by a second network function, mapping or remapping of a session for a non-access stratum to a bearer for an access stratum, wherein the network device comprises the first network function and the second network function.

2. The method of claim 1, wherein the first network function is a mobility management function (MMF); and the second network function is a bearer management function (BMF).

3. The method of claim 1 or 2, wherein performing, by the first network function, the measurement configuration associated with mobility between network functions comprises:
establishing, by the first network function, measurement configuration information for a terminal based on first information, wherein the first information comprises at least one of the following: a wireless environment where the terminal is located, a potential frequency band of a neighboring access point, or reference pilot signal information; and
transmitting, by the first network function, the measurement configuration information to the terminal.

4. The method of claim 3, wherein the measurement configuration information comprises at least one of the following: a measurement object, a measurement value, or a measurement reporting condition.

5. The method of claim 1 or 2, wherein performing, by the first network function, the update decision of the AP associated with mobility between network functions comprises:
establishing, by the first network function, a handover configuration massage based on second information, wherein the second information comprises at least one of the following: a measurement result reported from a terminal, a radio resource management (RRM) policy, or an inference result from an artificial intelligence (AI) model; and
transmitting, by the first network function, the handover configuration massage to the terminal.

6. The method of claim 5, wherein the handover configuration massage comprises at least one of the following: a list of candidate Aps, or a handover trigger threshold.

7. The method of any of claims 1 to 6, wherein performing, by the second network function, mapping or remapping of the session for the non-access stratum to the bearer for the access stratum comprises:
generating a mapping relationship of a session or a flow or a sub-flow of a smaller granularity to an air interface radio bearer based on third information, wherein the mapping relationship comprises one-to-one mapping, one-to-many mapping, many-to-one mapping, or many-to-many mapping;
the third information comprises at least one of the following: a session for the non-access stratum, a quality of service of a session for the non-access stratum, or a session characteristic analysis result from the access stratum.

8. The method of claim 7, further comprising:
providing, by the second network function, a bearer update service to the first network function, and
calling, by the second network function, a resource configuration service to obtain wireless configuration information of a candidate AP.

9. A method for mobility management, performed by a terminal, comprising:
receiving measurement configuration information transmitted from a first network function through an access point (AP), performing measurement based on the measurement configuration information, and reporting a measurement result;
receiving a handover configuration message transmitted from the first network function through the AP; and
completing an operation of replacing the AP and notifying the first network function.

10. The method of claim 9, wherein before completing the operation of replacing the AP, the method further comprises:
testing a handover trigger threshold based on a list of candidate APs in the handover configuration message, and initiating a handover execution step in case that a trigger condition is met.

11. The method of claim 9 or 10, wherein the handover configuration massage carries at least one of the following: a list of candidate APs, or a handover trigger threshold.

12. The method of claim 9, wherein the measurement configuration information comprises at least one of the following: a measurement object, a measurement value, or a measurement reporting condition.

13. The method of claim 9, further comprising:
performing service data transmission through the replaced AP.

14. The method of any of claims 9 to 13, wherein the first network function is a mobility management function (MMF).

15. A method for mobility management, performed by an access point (AP), comprising:
receiving measurement configuration information transmitted from a first network function, and transmitting the measurement configuration information to a terminal; and
receiving a handover configuration message transmitted from the first network function, and transmitting the handover configuration message to the terminal, or testing a handover trigger threshold based on a list of candidate APs in the handover configuration message, and initiating a handover execution step in case that a trigger condition is met.

16. The method of claim 15, wherein the measurement configuration information comprises at least one of the following: a measurement object, a measurement value, or a measurement reporting condition.

17. The method of claim 15, wherein the handover configuration massage carries at least one of the following: a list of candidate APs, or a handover trigger threshold.

18. The method of any of claims 15 to 17, wherein the first network function is a mobility management function (MMF).

19. A network device, comprising a memory, a transceiver and a processor, wherein
the memory is used for storing a computer program, the transceiver is used for receiving and transmitting data under control of the processor, and the processor is used for reading the computer program in the memory and performing the following operations:
performing, by a first network function, measurement configuration associated with mobility between network functions and/or update decision of an access point (AP) associated with mobility between network functions; and
performing, by a second network function, mapping or remapping of a session for a non-access stratum to a bearer for an access stratum,
wherein the network device comprises the first network function and the second network function.

20. The network device of claim 19, wherein the first network function is a mobility management function (MMF); and the second network function is a bearer management function (BMF).

21. The network device of claim 19 or 20, wherein performing the measurement configuration associated with mobility between network functions comprises:
establishing measurement configuration information for a terminal based on first information, wherein the first information comprises at least one of the following: a wireless environment where the terminal is located, a potential frequency band of a neighboring access point, or reference pilot signal information; and
transmitting the measurement configuration information to the terminal.

22. The network device of claim 21, wherein the measurement configuration information comprises at least one of the following: a measurement object, a measurement value, or a measurement reporting condition.

23. The network device of claim 19 or 20, wherein performing the update decision of the AP associated with mobility between network functions comprises:
establishing a handover configuration massage based on second information, wherein the second information comprises at least one of the following: a measurement result reported from a terminal, a radio resource management (RRM) policy, or an inference result from an artificial intelligence (AI) model; and
transmitting the handover configuration massage to the terminal.

24. The network device of claim 23, wherein the handover configuration massage comprises at least one of the following: a list of candidate APs, or a handover trigger threshold.

25. The network device of any of claims 19 to 24, wherein performing mapping or remapping of the session for the non-access stratum to the bearer for the access stratum comprises:
generating a mapping relationship of a session or a flow or a sub-flow of a smaller granularity to an air interface radio bearer based on third information, wherein the mapping relationship comprises one-to-one mapping, one-to-many mapping, many-to-one mapping, or many-to-many mapping;
the third information comprises at least one of the following: a session for the non-access stratum, a quality of service of a session for the non-access stratum, or a session characteristic analysis result from the access stratum.

26. The network device of claim 25, wherein the processor is further used for:
providing, by the second network function, a bearer update service to the first network function; and
calling, by the second network function, a resource configuration service to obtain wireless configuration information of a candidate AP.

27. A terminal, comprising a memory, a transceiver and a processor, wherein
the memory is used for storing a computer program, the transceiver is used for receiving and transmitting data under control of the processor, and the processor is used for reading the computer program in the memory and performing the following operations:
receiving measurement configuration information transmitted from a first network function through an access point (AP), performing measurement based on the measurement configuration information, and reporting a measurement result;
receiving a handover configuration message transmitted from the first network function through the AP; and
completing an operation of replacing the AP and notifying the first network function.

28. The terminal of claim 27, wherein the processor is further used for:
testing a handover trigger threshold based on a list of candidate APs in the handover configuration message, and initiating a handover execution step in case that a trigger condition is met.

29. The terminal of claim 27 or 28, wherein the handover configuration massage carries at least one of the following: a list of candidate APs, or a handover trigger threshold.

30. The terminal of claim 27, wherein the measurement configuration information comprises at least one of the following: a measurement object, a measurement value, or a measurement reporting condition.

31. The terminal of claim 27, wherein the processor is further used for:
performing service data transmission through the replaced AP.

32. The terminal of any of claims 27 to 31, wherein the first network function is a mobility management function (MMF).

33. A network device, comprising a memory, a transceiver and a processor, wherein
the memory is used for storing a computer program, the transceiver is used for receiving and transmitting data under control of the processor, and the processor is used for reading the computer program in the memory and performing the following operations:
receiving measurement configuration information transmitted from a first network function, and transmitting the measurement configuration information to a terminal; and
receiving a handover configuration message transmitted from the first network function, and transmitting the handover configuration message to the terminal, or testing a handover trigger threshold based on a list of candidate APs in the handover configuration message, and initiating a handover execution step in case that a trigger condition is met.

34. The network device of claim 33, wherein the measurement configuration information comprises at least one of the following: a measurement object, a measurement value, or a measurement reporting condition.

35. The network device of claim 33, wherein the handover configuration massage carries at least one of the following: a list of candidate APs, or a handover trigger threshold.

36. The network device of any of claims 33 to 35, wherein the first network function is a mobility management function (MMF).

37. A network device, comprising:
a mobility management function (MMF), used for performing measurement configuration associated with mobility between network functions and/or update decision of an access point (AP) associated with mobility between network functions; and
a bearer management function (BMF), used for performing mapping or remapping of a session for a non-access stratum to a bearer for an access stratum.

38. The network device of claim 37, wherein performing the measurement configuration associated with mobility between network functions comprises:
establishing measurement configuration information for a terminal based on first information, wherein the first information comprises at least one of the following: a wireless environment where the terminal is located, a potential frequency band of a neighboring access point, or reference pilot signal information; and
transmitting the measurement configuration information to the terminal.

39. The network device of claim 38, wherein the measurement configuration information comprises at least one of the following: a measurement object, a measurement value, or a measurement reporting condition.

40. The network device of claim 37, wherein performing the update decision of the AP associated with mobility between network functions comprises:
establishing a handover configuration massage based on second information, wherein the second information comprises at least one of the following: a measurement result reported from a terminal, a radio resource management (RRM) policy, or an inference result from an artificial intelligence (AI) model; and
transmitting the handover configuration massage to the terminal.

41. The network device of claim 40, wherein the handover configuration massage comprises at least one of the following: a list of candidate APs, or a handover trigger threshold.

42. The network device of any of claims 37 to 41, wherein performing mapping or remapping of the session for the non-access stratum to the bearer for the access stratum comprises:
generating a mapping relationship of a session or a flow or a sub-flow of a smaller granularity to an air interface radio bearer based on third information, wherein the mapping relationship comprises one-to-one mapping, one-to-many mapping, many-to-one mapping, or many-to-many mapping;
the third information comprises at least one of the following: a session for the non-access stratum, a quality of service of a session for the non-access stratum, or a session characteristic analysis result from the access stratum.

43. The network device of claim 42, wherein the bearer management function is further used for providing a bearer update service to the mobility management function; and
the bearer management function is further used for calling a resource configuration service to obtain wireless configuration information of a candidate AP.

44. A terminal, comprising:
a measuring unit, used for receiving measurement configuration information transmitted from a first network function through an access point (AP), performing measurement based on the measurement configuration information, and reporting a measurement result;
a receiving unit, used for receiving a handover configuration message transmitted from the first network function through the AP; and
a handover unit, used for completing an operation of replacing the AP and notifying the first network function.

45. The terminal of claim 44, further comprising:
a testing unit, used for testing a handover trigger threshold based on a list of candidate APs in the handover configuration message, and initiating a handover execution step in case that a trigger condition is met.

46. The terminal of claim 44 or 45, wherein the handover configuration massage carries at least one of the following: a list of candidate APs, or a handover trigger threshold.

47. The terminal of claim 44, wherein the measurement configuration information comprises at least one of the following: a measurement object, a measurement value, or a measurement reporting condition.

48. The terminal of claim 44, further comprising:
a service transmitting unit, used for performing service data transmission through the replaced AP.

49. The terminal of any of claims 44 to 48, wherein the first network function is a mobility management function (MMF).

50. A network device, comprising:
a transmitting unit, used for receiving measurement configuration information transmitted from a first network function, and transmitting the measurement configuration information to a terminal; and
a processing unit, used for receiving a handover configuration message transmitted from the first network function, and transmitting the handover configuration message to the terminal, or testing a handover trigger threshold based on a list of candidate APs in the handover configuration message, and initiating a handover execution step in case that a trigger condition is met.

51. The network device of claim 50, wherein the measurement configuration information comprises at least one of the following: a measurement object, a measurement value, or a measurement reporting condition.

52. The network device of claim 50, wherein the handover configuration massage carries at least one of the following: a list of candidate APs, or a handover trigger threshold.

53. The network device of any of claims 50 to 52, wherein the first network function is a mobility management function (MMF).

54. A processor-readable storage medium, wherein the processor-readable storage medium stores a computer program and the computer program causes a processor to perform the method for mobility management of any of claims 1 to 8, or perform the method for mobility management of any of claims 9 to 14, or perform the method for mobility management of any of claims 15 to 18.
